Europäisches Patentamt

European Patent Office

Office européen des brevets

(11) Publication number: **0 334 669**
A2

# EUROPEAN PATENT APPLICATION

(21) Application number: 89302953.8

(22) Date of filing: 23.03.89

(51) Int. Cl.⁴: **H 04 N 1/00**
H 04 N 1/32

(30) Priority: 25.03.88 JP 69594/88

(43) Date of publication of application:
27.09.89 Bulletin 89/39

(84) Designated Contracting States: DE FR GB IT SE

(71) Applicant: Oki Electric Industry Company, Limited
7-12, Toranomon 1-chome Minato-ku
Tokyo 105 (JP)

(72) Inventor: Yoshida, Isao c/o Oki Electric
Industry Co., Ltd 7-12 Toranomon 1-chome
Minato-ku Tokyo (JP)

Inoue, Hidetoshi c/o Oki Electric
Industry Co., Ltd 7-12 Toranomon 1-chome
Minato-ku Toyko (JP)

Arai, Kanji c/o Oki Electric
Industry Co., Ltd 7-12 Toranomon 1-chome
Minato-ku Tokyo (JP)

(74) Representative: Read, Matthew Charles et al
Venner Shipley & Co. 368 City Road
London EC1V 2QA (GB)

(54) Method of and apparatus for facsimile communications.

(57) A facsimile apparatus (2) is connected to another (5) through a communication network (NW1) that may include a network of relative good transmission quality (e.g. a conventional wire network) (NW1A) and a network of relatively bad quality (e.g. a mobile 'phone network) (NW1B). If the selected transmission path is of good quality, transmission is carried out in a conventional manner. However, in the event that the transmission path is of relatively bad quality, an adaptive type error control means is utilised for error correction in response to the quality of the transmission path.

EP 0 334 669 A2

## Description

## METHOD OF AND APPARATUS FOR FACSIMILE COMMUNICATIONS

### BACKGROUND OF THE INVENTION

#### 1. Field of the Invention

The present invention relates to facsimile communications between standard facsimile apparatuses, and more particularly to the same through a communication network composed of neworks with good transmission quality such as a wire system network, and of networks with relatively bad transmission quality such as an open-wire carrier circuit and a mobile system network, the foregoing networks with good and bad qualities being interspersed beween the foregoing facsimile apparatuses.

Such communications among facsimile apparatuses are primarily achieved conventionally through a wire system network such as a public data network (PDN), an integrated services digital network (ISDN), a public switched data network (PSDN) or a facsimile communication network (FICS) with use of equipment also for use in the above networks. Accordingly, CCITT Recommendation, an international standard for example recommends facsimile communications through a wire system network in particular. Standard facsimile systems enjoining their wide application over domestic and overseas areas adopt the international standard or at least a standard based thereupon. Both are however designed for a wire system network with relatively good transmission quality, without having any measure against occurrence of noises and broken lines, e.g., a powerful error correcting function.

While, automobile telephones and other mobile networks suffer from varieties of factors of disturbance because of their inclusion of mobile radio channels, such kinds as external noises inclusive of internal noises emitted from radio transmitter-receiver units (TRU) and of urban noises, including multipath phasing and shadowing occurring upon propagation of electric waves and control signals through hand-off and voice channels peculiar to a cellular system, thus presenting severely deteriorated quaiity networks to the facsimile communications. The use of conventional standard facsimile device therefore allows deteriorated image quality or frequent occurrence of interruption of communications, as reported in "Experimental Facsimile Signal Transmission in Mobile Communication channels", Omori and Kinoshita, No. 2432, the Unified Meeting of the Society of the Electro Communication, 1984.

### SUMMARY OF THE INVENTION

In view of the drawbacks of the conventional techniques, it is an object of the present invention to provide a method of and an apparatus for stable facsimile communications substantially free of deterioration of image quality even among communication networks inclusive of mobile networks suffering from severe disturbance and the like.

To achieve the above object, the present invention comprises facsimile signal converting apparatuses in effecting facsimile communications mediated by a communication network composed of a wire system network with relatively good transmission quality such as a public data network (PDN) and an integrated services data network (PSDN), and of an open-wire carrier circuit with bad transmission quality and of a mobile system network (hereinafter referred collectively to as a mobile system network), the foregoing facsimile signal converting apparatuses being located on a transmission path connecting between standard facsimile apparatuses both in communication so as to put the whole of the mobile system network or a target fractional part thereof.

The facsimile signal converting apparatus is composed of realization means opertional facing the standard facsimile apparatus for realizing a standard transmission control procedure, and of realization means for realizing an impoved transmission control procedure, having a powerful error control function capable of stable error-free facsimile communications with less deterioration of image quality even inclusion of a fraction of the mobile system nework, further including a converting function between the standard transmission control procedure or its equivalent and the improved transmission control procedure (protcol converting function).

The above and other objects, features and advantages of the present invention will become more apparent from the following description when taken in conjunction with the accompanying drawings in which preferred embodiments of the present invention are shown by way of illustrative example.

### BRIEF DESCIPTION OF THE DRAWINGS

Fig. 1 is an illustration of a relay system showing an embodiment of a facsimile communication system according to the present invention;

Fig. 2 is a block diagram of a facsimile signal converting apparatus;

Fig. 3 is an illustration showing a signaling system in phases B, C and D in transmission from a calling station;

Fig. 4 is an illustration showing the signaling system in phases B, C and D in reception by the calling station;

Fig. 5 is an illustration of a relay system showing another embodiment of the facsimile communication system of the present invention; and

Fig. 6 is a block diagram showing a facsimile apparatus according to the present invention.

### DESCRIPTION OF THE PREFERRED EMBODIMENT

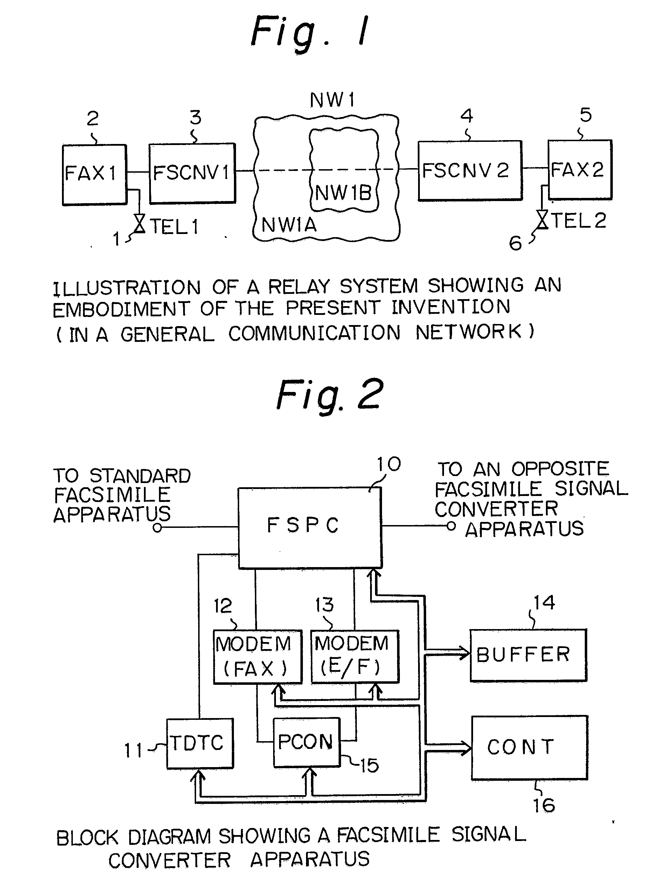

Referring to Fig. 1, a relay system in an embodiment of the present invention is illustrated. Telephone sets 1, 6 (TEL 1, TEL 2) are connected respectively to standard facsimile apparatuses 2, 5 (FAX 1, FAX 2) each including therein a standard transmission procedure such as CCITT Recommendation T30 or T70, for example. The standard facsimile apparatuses 2, 5 are connected respectively to facsimile signal converting apparatuses 3, 4 (FSCNV 1, FSCNV 2), the latters being connected to each other through a communication network NW1 composed of a subnetwork NW1A with relatively good channel quality such for example as a wire system and of a subnetwork NW1B with relatively bad channel quality such for example as an open-wire carrier channel and a mobile system network. For convenience, the facsimile apparatus 2 will be hereafter called a calling station, while the facsimile apparatus 5 called a called station.

Referring further to Fig. 2, the facsimile signal converting apparatus 3 or 4 is illustrated in the form of a functional block diagram. In the figure, designated at 10 (FSPC) is a facsimile signal path control unit, 11 is a tone detecting unit (TDTC), 12 is a modem (MODEM (FAX)) for a standard transmission control procedure for communication with the standard facsimile apparatus, 13 is a modem (MODEM (E/F)) for a special transmission control procedure for communication between the facsimile signal converting apparatuses 3 and 4, 14 is a buffer memory (BUFFER) for storage of received control signals and message signals, 15 is an information/protocol converting unit (PCON), and 16 is an apparatus control unit (CONT).

The facsimile signal path control unit (hereafter referred to as FAX signal path control unit) 10 includes a function to transmit signals from the calling side such as a calling completion signal and a dialing signal, etc. to the network NW1 and conversely transmit signals from the network NW1 such as a dial tone, calling and busy tones, and a talkie signal, etc. to the calling side, while transmitting a calling signal and a broken line signal, etc., from the network NW1 to the called side and conversely transmitting answer and interruption signals on the called side to the network NW1, further including means to assure voice communications in manual connection.

The information/protocol converting unit 15 includes adaptive error control means, which means is to judge by itself the conditions of a channel in use for selecting and setting a proper error control mode. For example, with a mobile system network situated under the conditions of a very intense received electric field and a stable channel the adaptive error control means provides an error detecting function based upon a cyclic code to the mobile system network while with the same network under the conditions of a weak electric field and of an unstable channel it provides a self correcting function based upon a diffusion code to the channel and further under the conditions of a further bad channel it provides a more powerful error correcting function. It can thus select a proper error control mode among plural modes combined with a variable block length type request repeat function. Additionally, the information/protocol converting unit 15 assures automatic protocol conversion in response to the conditions of the transmission speed of a modem in use and a paper size, etc.

Referring here to Fig. 1, a situation of the embodiment will be described wherein the calling side facsimile apparatus 2 manually transmits any signal to the called side automatic facsimile apparatus. 5.

With an operator actuating the telephone set 1 and the facsimile appratus 2 for call-out, a call signal is transmitted to the communication network NW1 through the FAX signal converting apparatus 3 for starting connection for the call-out. Then, the telephone set 1 or the facsimile apparatus 2 sends out a selection signal for connection of the called station through the FAX signal converting apparatus 3 to the communication network NW1. The communication network NW1 performs predetermined connection operation after receiving the selection signal and sends out a call signal through the FAX signal converting appartus 4 to the facsimile appartus 5 and the telephone set 6. The facsimile apparatus 4 detects the call signal for its answering. The FAX signal converting apparatus 4 relays the answering to the communication network NW1 which then performs predetermined operation upon reception of the answering, for looping a channel from the telephen set 1 or the facsimile apparatus 2 to the facsimile apparatus 5 or the telephone set 6 through the FAX signal converting apparatus 3, communication network NW1 and FAX signal converting apparatus 4. In succession, the facsimile apparatus 5 sends out a call-in identification signal CED which is then detected by the FAX signal converting apparatuses 4, 3 for preparation of transmission/reception of the facsimile signal. The calling side operator ascertains whether the call is connected to a called side voice terminal by listening to the call-in identification signal CED, and effects operation to start facsimile transmission. The above procedure corresponds to the phase A of the facsimile communication procedure. For the phases B, C, D there are available a tonal singaling system, a binary code signaling system and a combination thereof. In the following, a situation with the binary signaling system will be described.

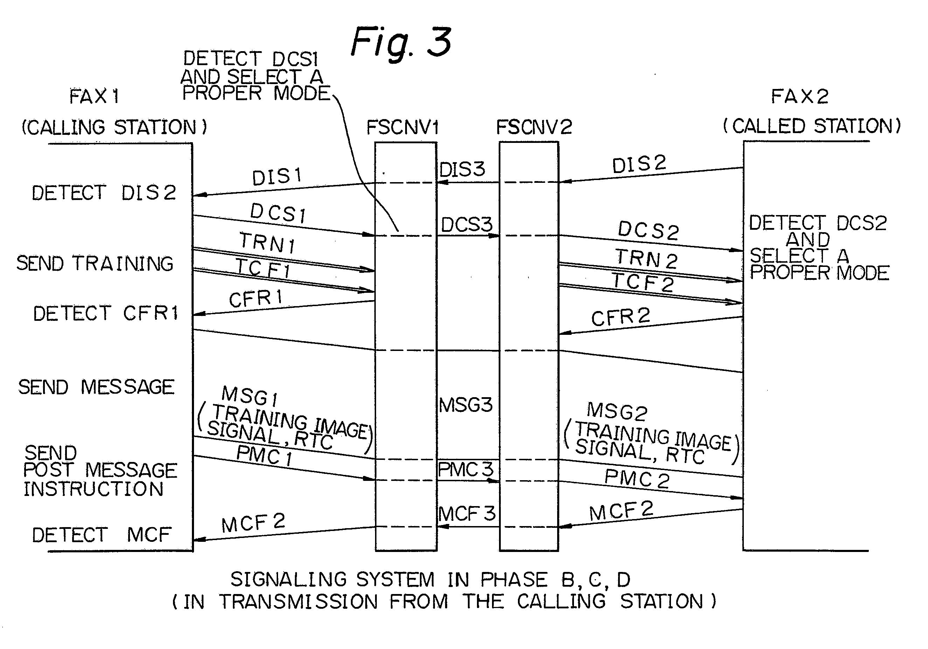

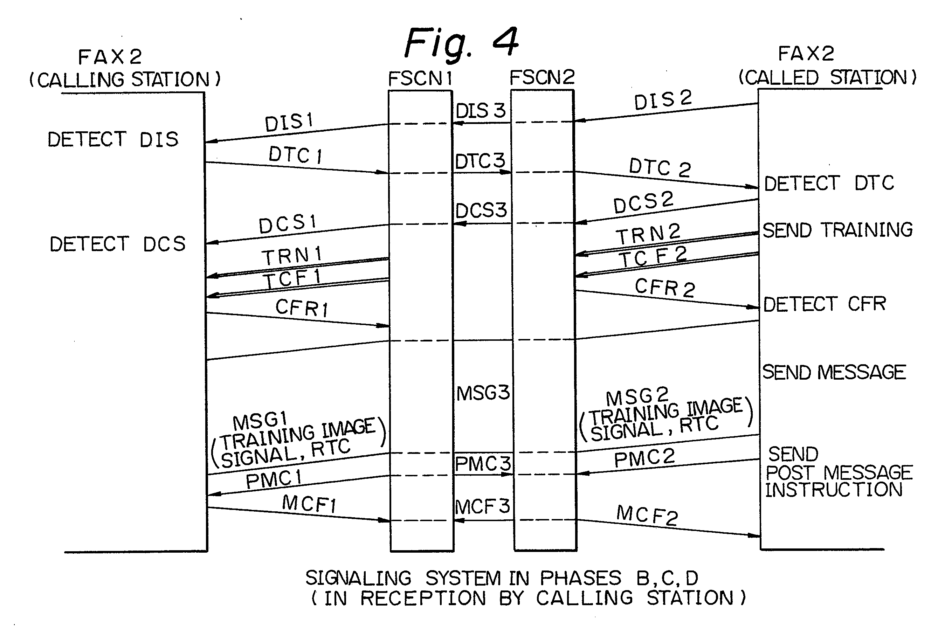

Figs. 3 and 4 are diagrams of signaling systems in the phases B, C and D involved in the control means in the embodiment of the present invention, the former being a case of the facsimile transmission from the calling station and the latter a case of the facsimile reception by the same. As illustrated in Fig. 3, a modem operational at a low speed of 300 to 2400 bps is available for transmission of control signals between the facsimile apparatus 4 and the FAX signal converting apparatus 3 and between the facsimile apparatus 5 and the FAX signal converting apparatus 4, while a high speed one available for transmission of training, TCF and message signals. Hereupon, the transmission speeds between the facsimile apparatus 2 and the FAX signal converting appartus 3 and between the facsimile apparatus 5 and the FAX signal converting appartus 4 are optional responsibly to the respective channel conditions and are not necessarily needed to be the same. In addition, control signals and message signals are transmitted between the FAX signal converting apparatuses 3 and 4 by subjecting those signals to the information and protocol conversions at need and successively permitting a high speed error-free modem provided with a powerful error control function to process them. The facsimile apparatus 5 sends out a digital identification signal DIS 2 therefrom to the FAX signal converting apparatus 4, which signal is converted therein to DIS 3 and again to a digital identification signal DIS 1 in the FAX signal converting apparatus 3, and detected by the facsimile apparatus 2 as the latter signal DIS 1. After the facsimile apparatus 2 receives DIS 1 and sends sout a digital instruction signal DIS 1, the FAX signal converting apparatus 3 detects it as the same signal DCS 1 for its mode selection while the FAX signal converting apparatus 4 detects it as DIS 2 for its mode selection. In succession, the facsimile apparatus 2 sends out training signals TRN 1 and TCF 1, and then the FAX signal converting apparatus 3 sends out a reception-ready confiramion signal CFR 1. On the contrary, the FAX signal converting apparatus 4 sends out training signals TRN 2 and TCF 2 to the facsimile apparatus 5, and then the facsimile apparatus 5 sends out a reception-ready confiramtion signal CFR 2 to the FAX signal converting apparatus 4. Then, the facsimile apparatus 2 sends out a message signal MSG 1 inclusive of an image signal and further a post-message instruction signal PCM 1 such as a message end signal EOM and a procedure end signal EOP or a multipage signal MPS, etc., at the end of the message. The FAX signal converting apparatus 3 after the foregoing conversion sends out MSG 3 and PMC 3 by use of the error-free modem. The FAX signal converting apparatus 4 detects it and sends out it after its inverse conversion to the facsimile apparatus 5 as MSG 2 and PMC 2. The facsimile apparatus 2 after detection of the above signals sends out a message confirmation signal MCF 2 which is detected by the facsimile apparatus 2 as MCF 1.

The control procedure phase D thus completes as described above.

In addition, when it is deirous to complete the call, the control advances to the phase E, and the facsimile apparatus 2 sends out channel interruption instructions which are detected by the FAX signal converting apparatuses 3, 4 and the facsimile apparatus 5 whereby the latter apparatuses 3, 4 and 5 start their release operation and after taking release guard becomes blanking for successive calls.

Here, with the calling station being in reception as illustrated in Fig. 4, the facsimile apparatus 5 sends out a digital identification signal DIS 2, and the facsimile apparatus 2 detects it as DIS 1. Then, the facsimile apparatus 2 sends out digital transmission instructions DIS 1 which are detected by the facsimile apparatus 5 as DIS 2.

The handshake thereafter is the same as that in Fig. 3, but with the situation merely reversing between the calling and called stations.

Although the above description was performed for the binary code signaling system, the same may be applied to the tonal signaling system too. Additionally, although Group 4 is applicable to the standard facsimile apparatus, the control procedure between the standard facsimile apparatus and the FAX signal converting apparatus is needed to conform to CCITT Recommendations T70, T71 and others. Furthermore, the FAX signal converting apparatuses can be concentrated at a proper node in a communication network, e.g., on the boundary between subnetworks such as subscriber's switching office and an interrupted switching office or PSTN/PDN/ISDN, or in the vicinity of those subnetworks.

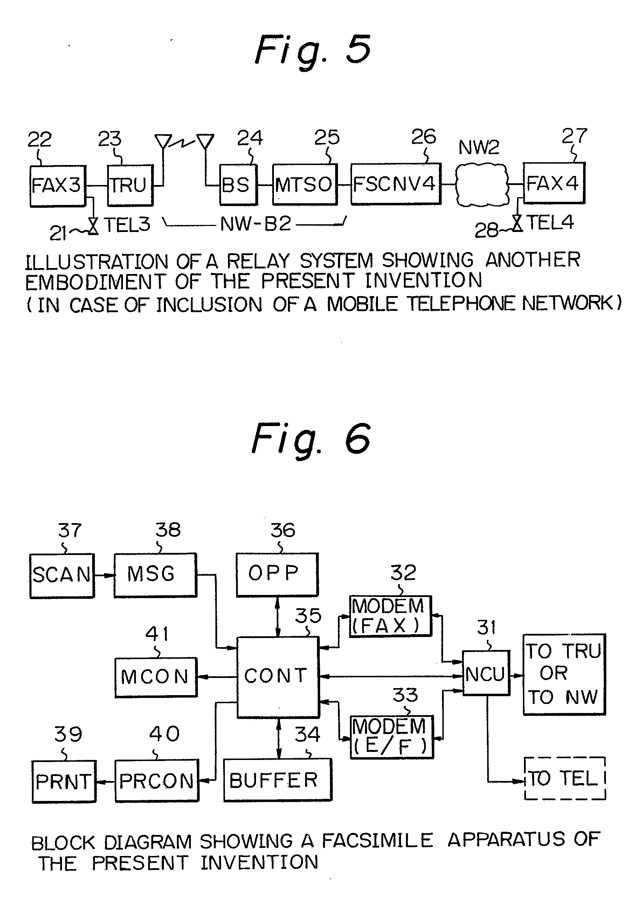

Referring further to Fig. 5, another embodiment of the present invention is illustrated wherein a facsimile apparatus including therein a special transmission control procedure is applied to a communication network inclusive of a mobile telephone. As illustrated in the figure, a mobile telephone set (control unit part) 21 (TEL 3) is connected with a facsimile apparatus 22 (FAX 3) including therein the special transmission control procedure which apparatus is then connected with a mobile telephone (TRU) (radio part) 23. The mobile telephone 23 is connected with a mobile telephone base cell (BS) 24 via antennas, which cell is then connected with a mobile telephone switching office (MTSO) 25, a FAX signal converting apparatus 26, a standard facsimile apparatus (FAX 4) 27, and a telephone set (TEL 4) 28, sucessively.

The FAX signal converting apparatus 26 may be integrally connected with the standard facsimile apparatus (SCAN) 27 for thereby serving together as a facsimile apparatus including both control procedures of the standard transmission control procedure and the special transmission control procedure. The facsimile apparatus also includes means to determine which control procedure should be employed upon a handshake between both sides of transmission and reception, for the purpose of assurance of stable facsimile communications less deteriorated in image quality independently of channel quality.

Fig. 6 is a block diagram illustrating the facsimile apparatus (FAX 3) 22. The facsimile apparatus 22 includes a network control unit (UCU) 31, a standard transmission control procedure modem (MODEM (FAX)) 32, a special transmission control procedure modem (MODEM (E/F)) 33, a buffer memory (BUFFER) 34, a control unit (CONT) 35, an operator control panel (OPP), a document scanning unit (SCAN)) 37, an image signal processing unit (MSG) 38, a printing unit (PRINT) 39, a printing control unit (PRCON) 40, and a mechanism control unitl (MCON) 41.

The operation is as follows.

Once a document is set to the facsimile apparatus 22 and the communication channel is set by an operator as described previously, the mechanism control unit 41 is operated under the control of the apparatus control unit 35 to start a series of read operation. The document scanning unit 37 provides a read result to the image signal processing unit 38 for converting it to an image signal, and the resulting image singal is sent to the apparatus control unit 35. The apparatus control unit 35, which includes therein a line memory and an image signal compressor operative under MH and MR systems, processes the read result in a predetermined manner and stores the same in the buffer memory 39 as a transmission message. In addition, the apparatus control unit 35 continues to take a handshake with the counterpart apparatus, thereby judging whether that apparatus is to conform to the standard transmission control procedure or the special one, for mode selection. The apparatus control unit 35 thereafter reads the foregoing message signal from the buffer memory 39, and accomplishes the successive facsimile communications utilizing either of the modems in conformity with the mode determined as such.

In reception, the apparatus control unit 35 after setting the associated communication channel selects either of the standard and special transmission control procedures through a handshake with the counterpart apparatus, and starts the facsimile communications. The buffer memory 34 stores in succession the received message signal therein. The apparatus control unit 35 thereafter drives a receiver mechansim through the mechanism control unit 41 to take out the received message from the buffer memeory 34 for demodulation of the image signal and conversion the same into a printing signal, and sends the resulting printing signal to the printing unit 39 for print-out thereof onto a predetermined sheet of paper.

According to the method of facsimile communications of the present invention, as described above, stable facsimile communications less deteriorated in image quality is assured even in facsimile communications mediated by a communication network inclusive of a mobile system network and an open-wire carrier channel both suffering from varieties of factors of disturbance. In addition, the methode allows the intact use of an inexpensed, mass-produced standard facsimile, thereby assuring error-free facsimile communications at a low cost.

Furthermore, a facsimile apparatus associated with the present invention including both of a standard transmission control procedure and a special transmission control procedure provided with an error control function can also realize such error-free facsimile communications.

Although certain prefered embodiments have been shown and described, it should be understood that many changes and mofifications may be made therein without departing from the scope of the appended claims.

## Claims

1. A pair of facsimile signal converting apparatuses arranged facing each other, in facsimile communications between standard facsimile apparatuses mediated by a communication network composed of networks with good and bad transmission quality both networks being interspersed between said facsimile apparatuses, so as to put at least a fraction of said communicaton network therebetween, comprising:

(a) means including a standard transmission control procedure for interfacing with said standard facsimile apparatuses;

(b) means including a connection control procedure for connection with said communicaton network;

(c) means for judging the channel quality of said network; and

(d) adaptive control type error control means for error correction responsive to said channel quality of said network.

2. A pair of facsimile signal converting apparatus accoridng to Claim 1, wherein said adaptive control type error control means assures powerful error control when said channel quality is severely deteriorated.

3. A pair of facsimile signal converting apparatus according to Claim 1, wherein at least one of said facsimile signal converting apparatuses is disposed at a node of said communication nework or in the vicinity of the same.

4. A facsimile apparatus for a communication network composed of networks with good and bad transmission qualities, comprising:

(a) means including a standard transmission control procedure;

(b) means including a special transmission control procedure which has an adaptive control type error control function serving to judge the conditions of the channel of said communication network for error control responsive to said conditions; and

(c) means for selecting either of said standard transmission control procedure and said special tranmission control procedure.

5. A facsimile apparatus according to Claim 4, wherein said adaptive control type error control means assures powerful error control when said channel quality is severly deteriorated.

6. A method of facsimile communications between first and second standard facsimile apparatuses, said apparatuses being disposed facing each other through a communication network composed of networks with good and bad transmission quality both networks being interspersed between said apparatuses, so as to put at least a fraction of said communication network therebetween, said method comprising the steps of:

(a) detecting a second facsimile signal issued from said second facsimile apparatus;

(b) judging the quality of a communication channel for use in said communication network based upon the intensity of said second facsimile signal;

(c) detecting a first facsimile signal issued from said first facsimile apparatus;

(d) demodulating said first facsimile signal;

(e) applying predetermined error control to the demodulated signal based upon said judgment on the quality of said communication channel;

(f) modulating the signal so applied to the error control; and

(g) sending out the singal so modulated.

7. A method of facsimile communications between first and second facsimile apparatuses mediated by a communication network composed of networks with good and bad transmission qualities, both networks being interspersed between said apparatuses, said apparatuses including a standard transmission control procedure as well as a special transmission control procedure having an adaptive control type error control function assuring error control responsibly to channel conditions, said method comprising:

(a) detecting a second facsimile signal issued from the second facsimile apparatus;

(b) judging the quality of communication channels for use in said communication network based upon the intensity of siad second fracsimile signal;

(c) selecting either of said standard transmission control procedure and said special transmission control procedure based upon said judgement on said quality of the communication channel; and

(d) sending out said first facsimile signal issued from said first facsimile apparatus to said second facsimile apparatus through said selected means.

8. Facsimile apparatus (2, 3; 4, 5) for connection to another thereof through communication networks (NW1) that may include both a network of relatively good (NW1A) and bad (NW1B) quality, including means (3; 4) for establishing a standard transmission connection to the networks for use with a relatively good quality communication path through the networks, and characterised by means for determining the quality of the communication path established through the networks, and adaptive error control means for error correction responsive to the quality of the communication path for use when said path is of relatively bad quality.

# *Fig. 1*

ILLUSTRATION OF A RELAY SYSTEM SHOWING AN
EMBODIMENT OF THE PRESENT INVENTION
( IN A GENERAL COMMUNICATION NETWORK )

# *Fig. 2*

BLOCK DIAGRAM SHOWING A FACSIMILE SIGNAL
CONVERTER APPARATUS

# Fig. 3

DETECT DCS1
AND SELECT A
PROPER MODE

FAX 1
(CALLING STATION)

FAX 2
(CALLED STATION)

FSCNV1    FSCNV2

DETECT DIS 2 ←—— DIS1 ———→ | DIS3 ←—————— DIS2 ←—————

———— DCS1 ————→ | DCS3 ———— DCS2 ————→  DETECT DCS2
SEND TRAINING ——— TRN1 ———→                    TRN 2 ————→   AND
——— TCF1 ———→                    TCF 2 ————→   SELECT A
                                                              PROPER MODE
DETECT CFR1 ←—— CFR1 ————         ←—— CFR2 ——————

SEND MESSAGE

MSG1                    MSG3         MSG2
(TRAINING IMAGE         (TRAINING IMAGE
SIGNAL, RTC)            SIGNAL, RTC)

SEND            PMC1           PMC3         PMC2
POST MESSAGE
INSTRUCTION

DETECT MCF ←—— MCF2 ———   MCF3 ←——  MCF2 ←———

SIGNALING SYSTEM IN PHASE B, C, D
(IN TRANSMISSION FROM THE CALLING STATION)

EP 0 334 669 A2

## Fig. 4

FAX 2
(CALLING STATION)

FSCN1    FSCN2

FAX 2
(CALLED STATION)

DETECT DIS

DIS1    DIS3    DIS2

DTC1    DTC3    DTC 2    DETECT DTC

DCS3    DCS2

DETECT DCS

DCS1    TRN2    SEND TRAINING

TRN1    TCF2

TCF1

CFR1    CFR2    DETECT CFR

SEND MESSAGE

MSG3    MSG2
(TRAINING IMAGE
SIGNAL, RTC)

MSG1
(TRAINING IMAGE
SIGNAL, RTC)

PMC3    PMC2    SEND
POST MESSAGE
INSTRUCTION

PMC1

MCF1    MCF3    MCF2

SIGNALING SYSTEM IN PHASES B, C, D
(IN RECEPTION BY CALLING STATION)

EP 0 334 669 A2

# Fig. 5

ILLUSTRATION OF A RELAY SYSTEM SHOWING ANOTHER EMBODIMENT OF THE PRESENT INVENTION (IN CASE OF INCLUSION OF A MOBILE TELEPHONE NETWORK)

# Fig. 6

BLOCK DIAGRAM SHOWING A FACSIMILE APPARATUS OF THE PRESENT INVENTION